Europäisches Patentamt

European Patent Office

Office européen des brevets

(19)

(11) Veröffentlichungsnummer : **0 159 597**
**B1**

(12) **EUROPÄISCHE PATENTSCHRIFT**

(45) Veröffentlichungstag der Patentschrift :
**11.01.89**

(51) Int. Cl.⁴ : **B 01 D 33/26**, B 01 D 29/34

(21) Anmeldenummer : **85104114.5**

(22) Anmeldetag : **04.04.85**

(54) **Filter für Reinigungsmachine.**

(30) Priorität : **10.04.84 DE 3413467**

(43) Veröffentlichungstag der Anmeldung :
**30.10.85 Patentblatt 85/44**

(45) Bekanntmachung des Hinweises auf die Patenterteilung : **11.01.89 Patentblatt 89/02**

(84) Benannte Vertragsstaaten :
**DE FR GB IT**

(56) Entgegenhaltungen :
**FR--A-- 1 402 661**
**FR--A-- 1 548 949**
**GB--A-- 1 197 321**
**US--A-- 3 157 598**
**US--A-- 3 884 805**
**US--A-- 3 884 813**
**CHEMIE INGENIEUR TECHNIK, Band 42, Nr. 23, Dezember 1970, Seiten 1453,1454, Weinheim Verlag, DE; H. TRAWINSKI: "Filter für Nassprozesse"**

(73) Patentinhaber : **Böwe Reinigungstechnik GmbH**
**Haunstetterstrasse 112**
**D-8900 Augsburg (DE)**

(72) Erfinder : **Führing, Heinrich**
**Waldfriedenstrasse 71/2**
**D-8900 Augsburg (DE)**

EP 0 159 597 B1

## Beschreibung

Die Erfindung betrifft ein Filter für eine Reinigungsmaschine, insbesondere eine Trockenreinigungsmaschine, bei welchem in einem Gehäuse eine Anzahl von etwa scheibenförmigen Filterelementen auf einer rotierbaren Hohlwelle angeordnet ist, die mit dem Inneren der Welle in Verbindung stehen und auf ihrer sich quer zur Wellenachse erstreckenden Filterfläche Vorsprünge oder dergleichen zur Mitnahme der zu filternden Flüssigkeit bei Rotation aufweisen.

Bei einem solchen, bereits durch die US-PS 3157598 bekannten Filter erstrecken sich die Vorsprünge an der Filterfläche des einzelnen Filterelements in Richtung von der Wellennabe radial nach außen, wobei sie geradlinig, schräg oder gekrümmt über mindestens einen Teil des Filterradius verlaufen. Durch die Rotation der Filterelemente wird die im Filtergehäuse befindliche Flüssigkeit in eine Drehung um die Wellenachse versetzt. Hierdurch erfolgt jedoch nur eine unvollkommene Reinigung der Filterflächen.

Bei einem Anschwemmfilter gemäß der US-PS 3884805 sind zwischen ortsfesten, scheibenförmigen Filterelementen mit radial nach außen sich erstreckenden Stegen, Vorsprüngen oder Flügeln versehene, rotierbare Scheiben vorgesehen. Durch die rotierenden Stege wird die Flüssigkeitsmenge in dem zylindrischen Gehäuse in eine gleichmässige, turbulenzarme Drehung um die Gehäuseachse versetzt, und der Aufbau eines die Filterschicht schützenden Filterkuchens gewünschter Stärke erreicht.

Der Erfindung liegt die Aufgabe zugrunde, bei einem ohne Filterpulver arbeitenden Filter der eingangs genannten Art eine verbesserte Reinigung der Filterflächen auf den rotierenden Scheiben während des Filtervorgangs zu erreichen und damit die Standzeit des Filters zu erhöhen.

Diese Aufgabe wird gemäß der Erfindung dadurch gelöst, daß vor den Filterflächen des einzelnen Filterelements ein oder mehrere ortsfest angeordnete, sich in radialer Richtung erstreckende Stege oder dergleichen vorgesehen sind, die in achsparalleler Richtung bis dicht an die Vorsprünge heranragen, wobei die einander zugewandten Ränder von Stegen und Vorsprüngen in ihrer Form einander entsprechen.

Durch diesen erfindungsgemäßen Aufbau des Filters wird bei Drehung der Filterelemente eine gründliche Reinigung des Filtergewebes erreicht. Im Bereich zwischen den Filterelementen entsteht eine starke Turbulenz und eine heftige Strömung der zu filternden Flüssigkeit, z. B. ein in der Chemischreinigung übliches Lösemittel oder Wasser. Die Filterelemente mit ihren auf ihrer Oberfläche vorragenden Vorsprüngen, die beispielsweise etwa schaufelartig ausgebildet sein können, bewirken bei Rotation gegenüber den ortsfesten Stegen nicht nur eine in Umfangsrichtung sondern vor allem auch in achsparalleler Richtung verlaufende kräftige Strömung, die das Filtergewebe und die sonstige Filterschicht durchspült und säubert. Zur Unterstützung dieser Wäsche des Filtergewebes kann gleichzeitig auch noch ein an sich bekannter Rückspülvorgang durch Umkehr der durch das Filter verlaufenden Strömungsrichtung der zu filternden Flüssigkeit durchgeführt werden. Durch möglichst gute Anpassung der Form des äußeren, den Stegen zugewandten Randes der auf der Filterfläche befindlichen Vorsprünge an die Form des Stegrandes, sodaß nur ein schmaler, durch parallele Ränder begrenzter Spalt bleibt, kann dieser Wasch- und Spüleffekt des Filters gesteigert werden.

Durch die erfindungsgemäße Reinigung des Filters wird dessen Standzeit erheblich verlängert. Eine besonders einfache Anordnung und Montage der Stege zwischen den Filterelementen ergibt sich dadurch, daß die Stege auf zwischen den einzelnen Filterelementen parallel zu den Filterflächen im Gehäuse ortsfest angeordneten Scheiben an beiden Seiten befestigt sind.

Es ist natürlich auch ohne weiteres eine einfache kinematische Umkehrung der erfindungsgemäßen Anordnung möglich, nämlich daß anstelle der Filterelemente die Stege rotiert werden und dafür die Filterelemente mit ihrer Hohlwelle festgehalten werden.

Die Erfindung ist in der Zeichnung beispielsweise und schematisch dargestellt. Es zeigen:

Figur 1 einen Längsschnitt durch ein Filter gemäß der Erfindung,

Figur 2 einen Querschnitt durch das Filter gemäß der Linie A-B in Figur 1,

Figur 3 einen Querschnitt durch das Filter gemäß der Linie C-D in Figur 1 und

Figur 4 eine vergrößerte Darstellung eines Filterelements und eines dazugehörigen Steges.

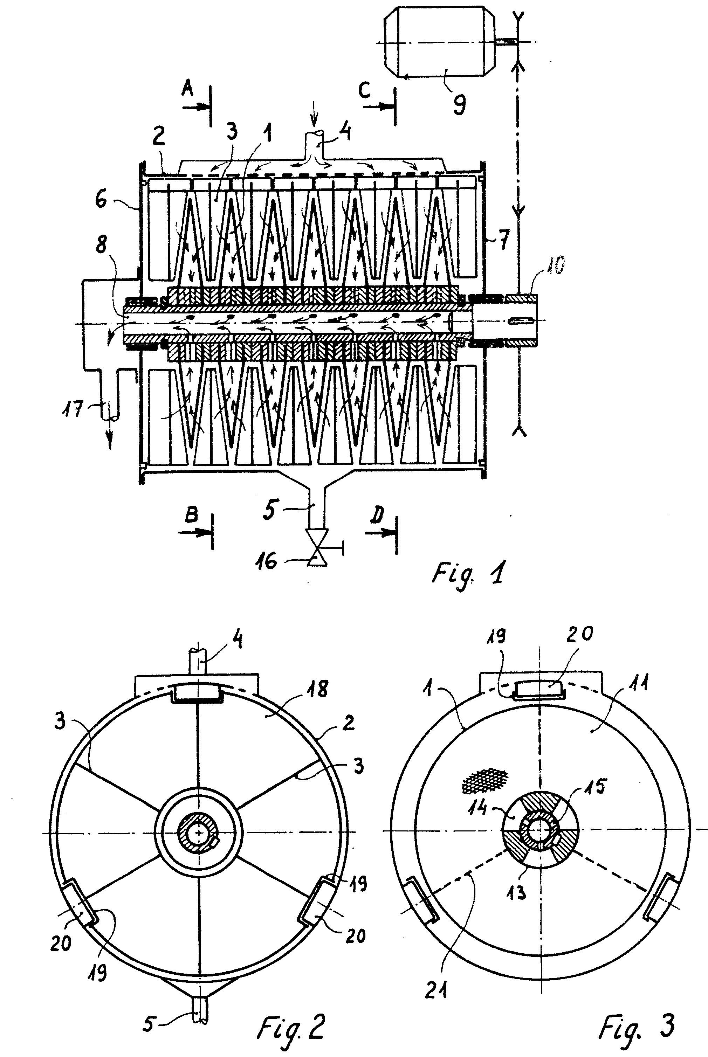

Figur 1 zeigt ein Rotationsscheibenfilter bekannter Bauart, in dem als wesentliche erfindungsgemäße Neuerung vor bzw. zwischen den Filterflächen der einzelnen Filterelemente 1 im Filtergehäuse 2 ortsfest angeordnete Stege 3 vorgesehen sind. Die zu filternde Flüssigkeit, z. B. ein organisches Lösemittel, wird durch die Eintrittsleitung 4 in das Gehäuse 2 eingeführt und kann aus diesem durch die Entleerungsleitung 5 nach Öffnen eines Ventils 16 aus dem Gehäuse abgelassen werden.

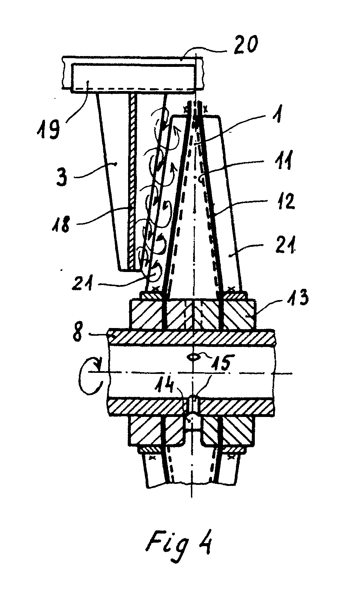

In den Lagerschilden 6 und 7 des Gehäuses 2 ist die Hohlwelle 8 drehbar gelagert. Sie kann durch einen Motor 9, der in bekannter Weise eine bei 10 befestigte, nicht näher dargestellte (d. h. nur durch eine Linie angedeutete) Riemenscheibe antreibt, in Rotation versetzt werden. Die Filterelemente 1 bestehen im wesentlichen aus miteinander verbundenen und auf der Nabe 13 befestigten, gelochten Blechen 11, die auf ihrer Außenseite mit einem die Filterfläche 12 bildenden Filtergewebe überzogen sind (Figur 4). Über die Nabe 13 ist das Filterelement 1 drehbar mit der Hohlwelle 8 verbunden.

Über Aussparungen 14 in der Nabe 13 und Bohrungen 15 in der Hohlwelle 8 steht der Innenraum des jeweiligen Filterelementes 1 mit dem Inneren der Hohlwelle 8 in Verbindung.

Bei Filterbetrieb strömt das Lösemittel nach dem Eintritt durch die Leitung 4 in an sich bekannter Weise über die Filterelemente 1 gemäß Pfeilrichtung in das Innere der Hohlwelle 8 und von dort über die Austrittsleitung 17 am Ende der Welle wieder nach außen.

Vor jeder der rotierenden Filterflächen 12 der Filterelemente 1 sind ortsfest angeordnet die Stege 3 vorgesehen, die sich im Gehäuse 2 in radialer Richtung von innen nach außen erstrecken.

Diese Stege 3 sind bei dem dargestellten Beispiel auf Scheiben 18 befestigt bzw. werden von diesen getragen und erstrecken sich in axialer Richtung nach beiden Seiten von diesen Scheiben 18 bis nahe an die Filterflächen 12 der beiden benachbarten Filterelemente 1. Die Scheiben 18 umgeben die Hohlwelle 8 und sind mit Ausschnitten oder Führungsrinnen 19 an ihrem Rand in entsprechenden Führungsleisten 20 oder dergleichen an der Gehäuseinnenwand geführt. Die Anwesenheit dieser Stege 3 vor den Filterflächen 12 bewirkt bei Rotation der Filterelemente 1 den oben geschilderten, das Filtergewebe reinigenden Wascheffekt.

Bei der in Figur 4 dargestellten Ausführungsform der Filterelemente 1 sind an der Filteroberfläche auf dem Filtergewebe die Vorsprünge 21 fest angeordnet (hier auf der Nabe 13 und am äußeren Rand befestigt), die zusammen mit dem Filterelement rotieren. Sie erstrecken sich mit ihrem Rand bis dicht an den Rand des jeweils gegenüber befindlichen Steges 3.

Die Form ihres Randes entspricht der Form des entsprechenden Randes des Steges, so daß zwischen beiden, wenn sie sich aneinander vorbeibewegen, nur ein schmaler (im dargestellten Beispiel gemäß Figur 4 paralleler) Spalt verbleibt. Durch die Relativbewegung zwischen Vorsprung 21 und Steg 3 entsteht, besonders bei schneller Rotation, eine entsprechend starke Verwirbelung der Filterflüssigkeit, wodurch, wie bereits oben ausgeführt, die Reinigung des Filtergewebes bei Rotation der Filterelemente 1 noch weiter gesteigert wird. Die Zahl der Vorsprünge 21 auf einer Filterfläche 12, die eine ähnliche flache Steg- oder Rippenform aufweisen wie die Stege 3, kann gleich, größer oder kleiner sein als die der Stege auf der gegenüber befindlichen Scheibe 18.

Im Beispiel der Figur 3 sind drei Vorsprünge 21 vorgesehen, die bei diesem Schnitt allerdings hinter der Zeichenebene liegen. Die Rotation der Hohlwelle 8 kann je nach Bedarf nur zeitweise oder auch ständig durchgeführt werden.

**Patentansprüche**

1. Filter für Reinigungsmaschine, insbesondere Trockenreinigungsmaschine, bei welchem in einem Gehäuse (6) eine Anzahl von etwa scheibenförmigen Filterelementen (1) auf einer rotierbaren Hohlwelle (8) angeordnet ist, die mit dem Inneren der Welle in Verbindung stehen und auf ihrer sich quer zur Wellenachse erstreckenden Filterfläche (12) Vorsprünge (21) zur Mitnahme der zu filtrierenden Flüssigkeit bei Rotation aufweisen, dadurch gekennzeichnet, daß vor den Filterflächen (12) des einzelnen Filterelements (1) ein oder mehrere ortsfest angeordnete, sich in radialer Richtung erstreckende Stege (3) vorgesehen sind, die in achsparalleler Richtung bis dicht an die Vorsprünge (21) heranragen, wobei die einander zugewandten Ränder von Stegen und Vorsprüngen in ihrer Form einander entsprechen.

2. Filter nach Anspruch 1, dadurch gekennzeichnet, daß die Stege (3) auf zwischen den einzelnen Filterelementen (1) parallel zu den Filterflächen (12) im Gehäuse ortsfest angeordneten Scheiben (18) an beiden Seiten befestigt sind.

**Claims**

1. Filter for a cleaning machine, especially a dry-cleaning machine, wherein a number of substantially disc-shaped filter elements (1) are disposed on a rotatable hollow shaft (8) in a housing (6), which filter elements are in communication with the inside of the shaft and have projections (21) on their filter face (12), which extend at right angles to the shaft axis, for carrying along the fluid to be filtered during rotation, characterised in that one or a plurality of fixedly disposed, radially extending webs (3) are provided in front of the filter faces (12) of the individual filter elements (1), which webs extend in an axis-parallel direction close to the projections (21), wherein the edges of webs and projections facing one another correspond to one another in respect of their shape.

2. Filter according to claim 1, characterised in that the webs (3) are mounted at both sides on discs (18) which are fixedly disposed between the individual filter elements (1) parallel to the filter faces (12) in the housing.

**Revendications**

1. Filtre pour machine de nettoyage, notamment de nettoyage à sec, dans lequel un certain nombre d'éléments filtrants (1) sensiblement en forme de disques sont montés sur un arbre creux (8) tournant dans une enveloppe (6), et communiquent avec l'intérieur de l'arbre et comportent sur leur surface filtrante (12) s'étendant transversalement à l'axe de l'arbre, des parties saillantes (21) pour entraîner le liquide à filtrer lors de la rotation, caractérisé en ce que devant la surface filtrante (12) de l'élément filtrant (1) sont prévues une ou plusieurs barrettes (3) montées fixes, s'étendant dans la direction radiale, et, dans la direction parallèle à l'axe, jusqu'aux parties saillantes (21), les bords des barrettes et des parties saillantes, qui sont tournés l'un vers l'autre, ayant des formes qui se correspondent.

2. Filtre suivant la revendication 1, caractérisé en ce que les barrettes (3) sont fixées des deux côtés à des disques (18) montés fixes dans l'enveloppe entre les éléments filtrants (1), parallèlement aux surfaces filtrantes (12).

Fig. 1

Fig. 2

Fig. 3

Fig 4